# EUROPEAN PATENT SPECIFICATION

(11) **EP 3 629 856 B1**
(45) Date of publication and mention of the grant of the patent: **14.07.2021**
(21) Application number: 18733335.6
(22) Date of filing: 24.05.2018
(51) Int. Cl.: A47J 31/36, A47J 31/38

(54) **COMBINED ESPRESSO COFFEE MACHINE**
KOMBINIERTE ESPRESSO-KAFFEEMASCHINE
MACHINE À CAFÉ EXPRESSO COMBINÉE

(30) Priority: 25.05.2017 IT 201700056947
(43) Date of publication of application: 08.04.2020
(73) Proprietor: Schulthes, Thomas, 25551 Lohbarbek (DE); Quick Mill S.r.l., 20030 Senago (MI) (IT)
(72) Inventor: SCHULTHES, Thomas, 25551 Lohbarbek (DE); MACCARONE, Angelo, 20032 Cormano (MI) (IT)
(74) Representative: Branca, Emanuela
(86) International application number: PCT/IB2018/053696
(87) International publication number: WO 2018/215969

(56) References cited:
- WO-A1-2015/055343
- WO-A1-2015/073732
- WO-A1-2017/009189
- WO-A2-2013/021270
- KR-U- 20100 010 456
- US-A1- 2011 094 390

## Description

The present invention relates in general to an espresso coffee machine and, in particular, to an espresso coffee machine able to combine the technical features of a so-called lever coffee machine and of a so-called traditional coffee machine.

As is well known, an espresso coffee machine is an instrument that makes it possible to prepare the drink known as espresso coffee and its derivatives (cappuccino, macchiato, infusions, etc.). Mainly, the function of an espresso coffee machine is to dispense water at an optimal temperature (from 88°C to 99°C depending on the type of coffee mix in use) for a correct extraction of the coffee, and at a pressure of approximately 9 bar, so that all the oils and hence the flavours of the coffee dissolved by the water (which serves as a solvent) go into the cup. In addition to these functions, the coffee machine normally also associates the function of producing steam to heat and froth the milk to make cappuccinos. Depending on the technology used, coffee machines can be divided between so-called lever machines and so-called traditional machines. The document WO 2015/055343 A1 discloses an espresso coffee machine.

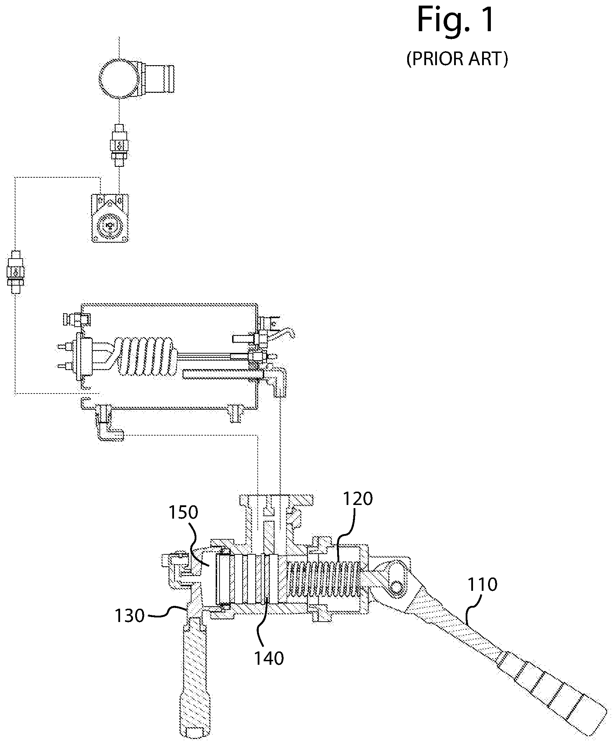

Lever machines, introduced on the market towards the end of the Forties of the past century, characterised an important historical phase of espresso coffee machines. A typical lever machine, shown schematically in figure 1, comprises mainly a mechanical system consisting of a lever 110, a spring 120 and a dispenser set 130. Lever machines have the merit of being very quiet, because they do not use any pump. Water pressure is thus generated by means of a piston 140 connected to the lever 110.

The characteristic element of a lever machine is the pressure curve, obtained as a function of time and water pressure, measured in bar. Pressure is determined manually on the basis of the thrust of the spring 120, pre-loaded by the operator following the actuation of the lever 110. Consequently, pre-infusion is determined by the time the operator decides to utilise before releasing the lever 110. The pre-loaded spring 120 pushes the piston 140 which compresses the water accumulated in a dispensing chamber 150. Pressure in the dispensing chamber 150 decreases as the spring 120 extends, until reaching a value of zero.

The main defects of lever machines are due to the temperature and volume of the water. Regulating temperature is very difficult. A long time is required to bring the dispenser set 130 to its operating temperature, given its considerable mass. Once optimal temperature is reached, the dispenser set 130 always remains very hot. Consequently, the internal components of the dispenser set 130 are damaged very quickly, and a great deal of attention must be paid to avoid being scalded.

The dispensing chamber 150 of the dispensing set 130 has a standard volume and it can thus contain only a determined quantity of water. Consequently, the quantity of coffee that can be dispensed is limited and not programmable. To modify the quantity of water, it is necessary to pull the lever 110 several times but, when this operation is carried out, the pressure exerted on the coffee during the extraction step becomes inconstant and variable, making it difficult for the operator to manage this situation.

In addition, the dispenser set 130 can be potentially dangerous, because during the step of dispensing the drink it is not possible to unload the pressure and it is necessary to wait for the lever 110 to return to its initial position. If the ground coffee is too fine and the pressure generated by the spring 120 is not sufficient, there is also the risk that the lever 110 may lock. Ultimately, to utilise a lever machine correctly it is necessary to have highly qualified, experienced personnel available.

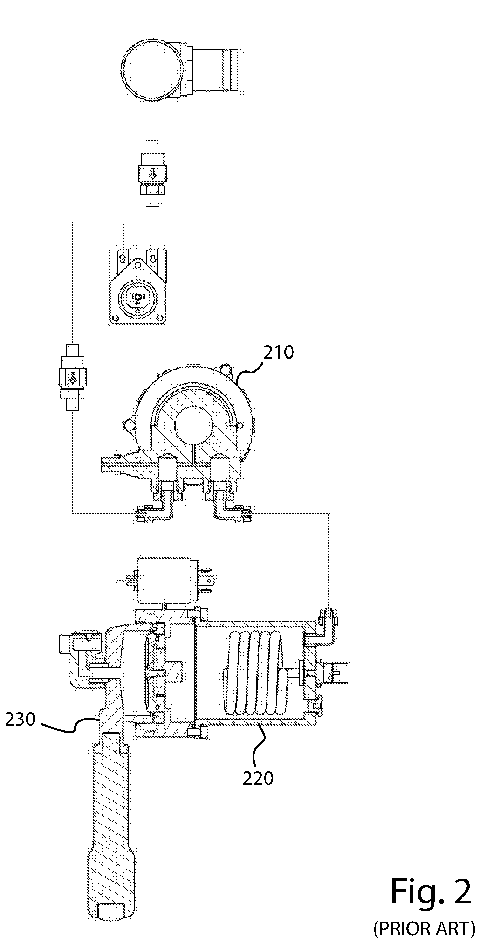

Traditional machines, also known as continuous brewery coffee machines or dosed coffee brewery machines depending on the type of operation, are the most widely used. A typical traditional coffee machine is shown schematically in figure 2. In this type of coffee machines, the pressure necessary for the extraction of the coffee is generated by an electric pump 210 that pushes water on the coffee panel of the coffee dispenser unit 230 at a constant pressure.

In continuous brewery coffee machines, the flow of coffee has to be controlled by the operator, who has to stop this flow at the appropriate time. In dosed coffee brewery machines, instead, an automated water dosing system is provided. The flow of water can be programmed in advance to stop when the pre-set dose has been dispensed.

Through the years, the temperature regulating system of traditional coffee machines has undergone considerable innovations. Initially, the temperature for the dispensing of the coffee was managed by a single boiler 220 connected to a pressure switch. Hence, it was necessary to find a compromise between the pressure in the boiler to deliver steam and the temperature for dispensing the coffee, using for example narrowings of various kinds.

Subsequently, dedicated boilers were realised for each service, i.e. a first boiler arranged to manage the dispensing of coffee and a second boiler arranged to manage the delivery of hot water and steam. In this way it is possible to regulate the temperatures of the two boilers distinctly and, consequently, to set the boiler of the coffee to the desired temperature through the most advanced temperature control systems (for example proportional-integral-derivative's or PID's type).

Use of traditional coffee machines is very simple, safe and intuitive, but they are markedly noisier machines than lever machines. In any case, unlike lever machines, in order to utilise a traditional coffee machine correctly it is not necessary to have specialised personnel available.

A purpose of the present invention is therefore to provide a combined espresso coffee machine that is able to solve the aforementioned drawbacks of the prior art in an extremely simple, economical and particularly functional manner.

In detail, a purpose of the present invention is to provide a combined espresso coffee machine that is able to eliminate the drawbacks of a lever machine, especially when it is used by an operator who is not particularly specialised.

Another purpose of the present invention is to provide a combined espresso coffee machine that is able to maintain the advantages of a lever machine, in terms of quietness but also of "charm", especially when correctly used by a specialised operator.

These and other purposes according to the present invention are achieved by realising a combined espresso coffee machine as set forth in claim 1.

Further features of the invention are described by the dependent claims, which are an integral part of the present description.

The features and advantages of a combined espresso coffee machine according to the present invention will be more readily apparent from the following exemplifying and not limiting description, referred to the schematic accompanying drawings, wherein:
figure 1 is a schematic view of the operating circuits of a lever coffee machine;
figure 2 is a schematic view of the operating circuits of a traditional coffee machine;

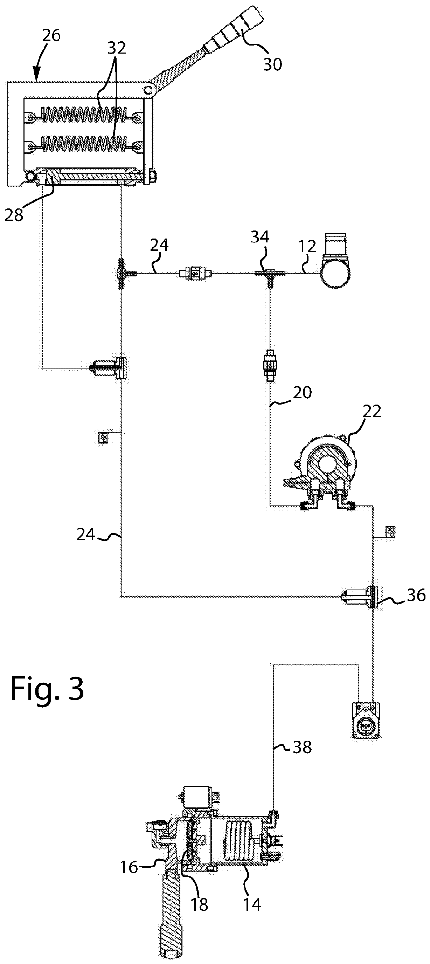

figure 3 is a schematic view of the operating circuits of the combined espresso coffee machine according to the present invention, shown in a resting configuration;
figure 4 is a schematic view of the operating circuits of the combined espresso coffee machine according to the present invention, shown in a configuration of dispensing by means of a pump;
figure 5 is a schematic view of the operating circuits of the combined espresso coffee machine according to the present invention, shown in a configuration of dispensing by means of a lever; and
figure 6 is a schematic view of the operating circuits of the combined espresso coffee machine according to the present invention, shown in a configuration of combined or "hybrid" dispensing.

With reference in particular to figures from 3 to 6, the operating circuits of a combined espresso coffee machine according to the present invention are shown schematically. The espresso coffee machine comprises a water feeding hydraulic circuit 12 and at least one boiler 14 for heating water, located downstream of said water feeding hydraulic circuit 12.

The espresso coffee machine then comprises a coffee dispenser unit 16, located downstream of the boiler 14 and provided with at least one coffee panel 18 configured for mixing hot water with coffee. Between the water feeding hydraulic circuit 12 and the boiler 14 is interposed a first pumping hydraulic circuit 20, provided with at least one pump 22 for water. The pump 22 can be of various types, for example rotative, vibration, geared, etc.

Between the water feeding hydraulic circuit 12 and the boiler 14 is also interposed a second pumping hydraulic circuit 24, connected in parallel with the first pumping hydraulic circuit 20 and provided with a lever pumping unit 26. The lever pumping unit 26 is provided with at least one pumping piston 28 manually operated by means of a lever 30. The pumping piston 28 can be of various dimensions and, unlike lever machines according to the prior art, solely has a function of pumping the water coming from the water feeding hydraulic circuit 12.

The lever 30 actuates the pumping piston 28 through the interposition of one or more springs 32 with adjustable load, so as to maintain the same water pressure as a lever machine according to the prior art, or to obtain different curves and profiles of water pressure according to the needs. As shown in the figures from 3 to 6, the lever pumping unit 26 works at room temperature, being physically separated both from the boiler 14, and from the coffee dispenser unit 16. The risk of damaging the internal components of the lever pumping unit 26 is thus eliminated, as is the risk of burns from contact with said lever pumping unit 26.

The boiler 14 is preferably provided with a proportional-integral-derivative (PID) adjustment device for regulating water temperature. In this way, regulation of the water temperature is extremely precise, because said temperature is directly set by the temperature controlled boiler 14 instead of by the coffee dispenser unit 16.

Between the water feeding hydraulic circuit 12 and both pumping hydraulic circuits 20 and 24 is interposed a first three-way valve 34. The first three-way valve 34 is configured for delivering the water coming from the water feeding hydraulic circuit 12 to the first pumping hydraulic circuit 20, to the second pumping hydraulic circuit 24 or to both pumping hydraulic circuits 20 and 24 according to the needs.

Similarly, between both pumping hydraulic circuits 20 and 24 and the temperature controlled boiler 14 is interposed a second three-way valve 36. The second three-way valve 36 is configured for delivering the pressurised water coming from the first pumping hydraulic circuit 20, from the second pumping hydraulic circuit 24 or from both pumping hydraulic circuits 20 and 24 to the temperature controlled boiler 14, through the interposition of a loading circuit 38 of the pressurised water.

The pump 22, drawing water directly from the water supply through the water feeding hydraulic circuit 12 and the first pumping hydraulic circuit 20, can exclude the lever pumping unit 26 by means of the first three-way valve 34. In this configuration, the pump 22 works autonomously to set the pressure of the water to be delivered to the temperature controlled boiler 14 and hence to the coffee dispenser unit 16.

Through the first three-way valve 34 the water can also be delivered in part to the pump 22 and in part to the lever pumping unit 26. In this configuration, the pump 22 can work in parallel with the lever pumping unit 26, precisely programming the volume of coffee that can be dispensed through the coffee dispenser unit 16.

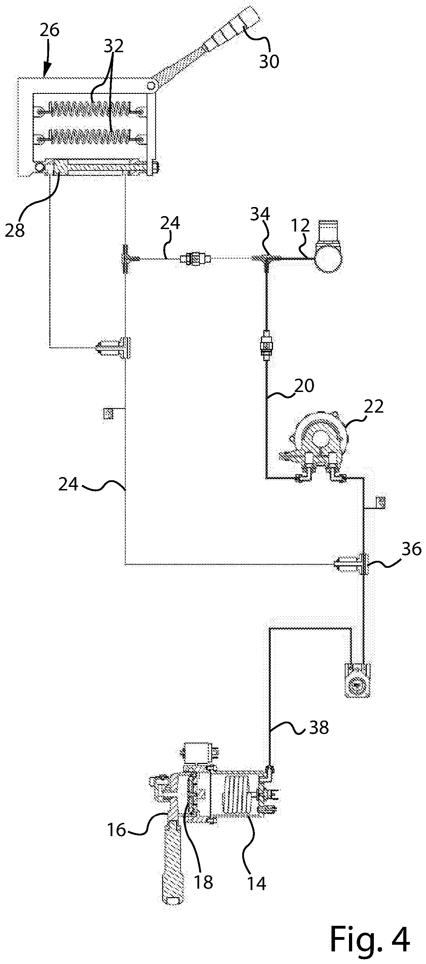

In detail, with reference to figure 4, the combined espresso coffee machine according to the present invention can function using solely the pump 22. In this configuration the first three-way valve 34 excludes the second pumping hydraulic circuit 24 and the related lever pumping unit 26. Coffee is dispensed by the coffee dispenser unit 16, passing through the temperature controlled boiler 14, in a simple and precise manner as takes place in traditional coffee machines. In this configuration the path of the water in the various circuits 12, 20 and 38 is indicated highlighting said circuits in bold lines in figure 4.

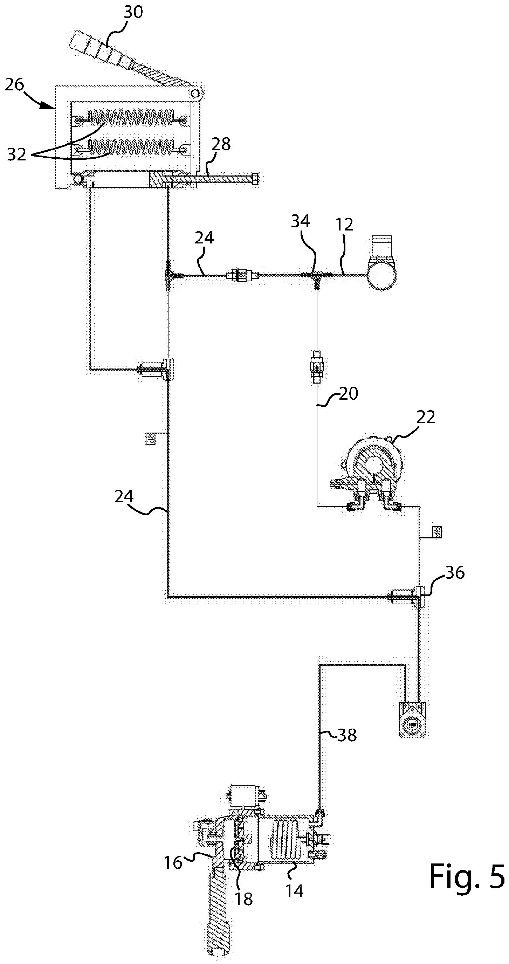

With reference to figure 5, the combined espresso coffee machine according to the present invention can also function using solely the lever pumping unit 26. In this configuration the first three-way valve 34 excludes the first pumping hydraulic circuit 20 and the related pump 22. Coffee is still dispensed by the coffee dispenser unit 16, passing through the temperature controlled boiler 14, with a pressure established manually by the pumping piston 28 as takes place in lever coffee machines. In this configuration the path of the water in the various circuits 12, 24 and 38 is indicated highlighting said circuits in bold lines in figure 5.

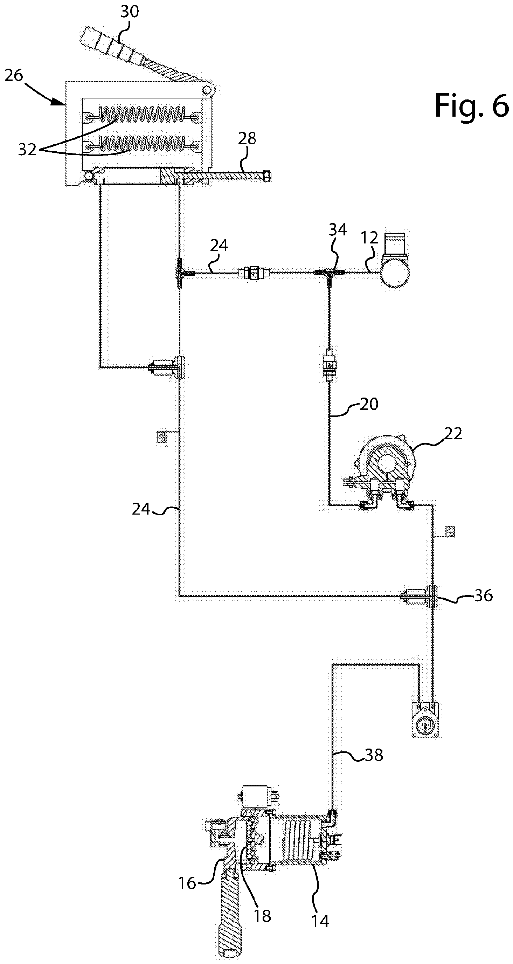

With reference, lastly, to figure 6, the combined espresso coffee machine according to the present invention can also function using both the pump 22 and the lever pumping unit 26. In this configuration, the first three-way valve 34 opens communication both with the first pumping hydraulic circuit 20 and the related pump 22, and with the second pumping hydraulic circuit 24 and the related lever pumping unit 26. By so doing, it is possible to obtain a water pressure curve characterised by the lever pumping unit 26, with the integration of the pump 22 to complete the step of dispensing the coffee into the cup. In this configuration the path of the water in all circuits 12, 20, 24 and 38 is indicated highlighting said circuits in bold lines in figure 6. In this configuration, moreover, it is possible to dispense a high number of beverages with respect to the classic "single/double-shot" coffee that can be dispensed by a lever coffee machine.

It has thus been seen that the combined espresso coffee machine according to the present invention achieves the purposes pointed out above. The combined espresso coffee machine according to the present invention always uses the same coffee dispenser unit 16 both in the lever operation configuration and in the pump operation configuration, as well as in the combined lever/pump utilisation configuration. The passage of the pressurised water always takes place through the same temperature controlled boiler 14. The end user is thus always free to decide autonomously which type of operating configuration to use.

The combined espresso coffee machine of the present invention thus conceived is susceptible in every case to many modifications and variants, all falling within the same inventive concept; furthermore, all details can be replaced by equivalent technical elements. In practice, the materials used, as well as their shapes and dimensions, can be of any type according to the technical requirements.

The scope of protection of the invention is therefore defined by the appended claims.

## Claims

1. Espresso coffee machine comprising:
- a water feeding hydraulic circuit (12);
- at least one boiler (14) for heating the water, located downstream of said water feeding hydraulic circuit (12);
- a coffee dispenser unit (16), located downstream of said boiler (14) and provided with at least one coffee panel (18) configured for mixing hot water with coffee; and
- a first pumping hydraulic circuit (20), provided with at least one pump (22) for water, interposed between said water feeding hydraulic circuit (12) and said boiler (14),
the espresso coffee machine being **characterized in that** a second pumping hydraulic circuit (24) is interposed between the water feeding hydraulic circuit (12) and the boiler (14), said second pumping hydraulic circuit (24) being connected in parallel with the first pumping hydraulic circuit (20) and being provided with a lever pumping unit (26), wherein said lever pumping unit (26) works at room temperature, being physically separated from both the boiler (14) and from the coffee dispenser unit (16).

2. Espresso coffee machine according to claim 1, **characterized in that** the lever pumping unit (26) is provided with at least one pumping piston (28) manually operated by a lever (30), wherein said pumping piston (28) is configured for pumping water coming from the water feeding hydraulic circuit (12).

3. Espresso coffee machine according to claim 2, **characterized in that** the lever (30) actuates the pumping piston (28) through the interposition of one or more springs (32) with adjustable load, so as to obtain different curves and profiles of water pressure according to the needs.

4. Espresso coffee machine according to any claims 1 to 3, **characterized in that** the boiler (14) is provided with a proportional-integral-derivative (PID) adjustment device of the water temperature.

5. Espresso coffee machine according to any claims 1 to 4, **characterized in that** a first three-way valve (34) is interposed between the water feeding hydraulic circuit (12) and both pumping hydraulic circuits (20, 24), said first three-way valve (34) being configured for delivering the water coming from the water feeding hydraulic circuit (12) to the first pumping hydraulic circuit (20), to the second pumping hydraulic circuit (24) or both pumping hydraulic circuits (20, 24) according to the needs.

6. Espresso coffee machine according to claim 5, **characterized in that** a second three-way valve (36) is interposed between both pumping hydraulic circuits (20, 24) and the boiler (14), said second three-way valve (36) being configured for delivering the pressurized water coming from the first pumping hydraulic circuit (20), from the second pumping hydraulic circuit (24) or from both pumping hydraulic circuits (20, 24) towards said boiler (14), through the interposition of a loading circuit (38) of the pressurized water.

7. Espresso coffee machine according to any claims 1 to 6, **characterized in that** the pump (22) is a rotative pump.

8. Espresso coffee machine according to any claims 1 to 6, **characterized in that** the pump (22) is a vibration pump.

9. Espresso coffee machine according to any claims 1 to 6, **characterized in that** the pump (22) is a geared pump.

## Patentansprüche

1. Espresso-Kaffeemaschine, umfassend:
- einem wasserführenden Hydraulikkreislauf (12);
- mindestens einem Heizkessel (14) zum Erhitzen des Wassers, der stromabwärts des wasserführenden Hydraulikkreislaufs (12) angeordnet ist;
- eine Kaffeeausgabeeinheit (16), die stromabwärts des Boilers (14) angeordnet und mit mindestens einer Kaffeetafel (18) versehen ist, die zum Mischen von heißem Wasser mit Kaffee konfiguriert ist; und
- einen ersten Pump-Hydraulikkreislauf (20), der mit mindestens einer Pumpe (22) für Wasser versehen ist und zwischen dem Wasser speisenden Hydraulikkreislauf (12) und dem Kessel (14) angeordnet ist,
wobei die Espresso-Kaffeemaschine **dadurch gekennzeichnet ist, dass** ein zweiter Pump-Hydraulikkreislauf (24) zwischen dem Wasserzufuhr-Hydraulikkreislauf (12) und dem Boiler (14) angeordnet ist, wobei der zweite Pump-Hydraulikkreislauf (24) parallel zu dem ersten Pump-Hydraulikkreislauf (20) geschaltet ist und mit einer Hebel-Pumpeinheit (26) versehen ist, wobei die Hebel-Pumpeinheit (26) bei Raumtemperatur arbeitet und sowohl von dem Boiler (14) als auch von der Kaffee-Ausgabeeinheit (16) physisch getrennt ist.

2. Espresso-Kaffeemaschine nach Anspruch 1, **dadurch gekennzeichnet, dass** die Hebel-Pumpeinheit (26) mit mindestens einem durch einen Hebel (30) manuell betätigen Pumpenkolben (28) versehen ist, wobei der Pumpenkolben (28) zum Pumpen von aus dem wasserführenden Hydraulikkreislauf (12) kommendem Wasser ausgebildet ist.

3. Espresso-Kaffeemaschine nach Anspruch 2, **dadurch gekennzeichnet, dass** der Hebel (30) den Pumpenkolben (28) durch die Zwischenschaltung einer oder mehrerer Federn (32) mit einstellbarer Last betätigt, sodass je nach Bedarf verschiedene Kurven und Profile des Wasserdrucks erhalten werden können.

4. Espresso-Kaffeemaschine nach einem der Ansprüche 1 bis 3, **dadurch gekennzeichnet, dass** der Boiler (14) mit einer Proportional-Integral-Derivativ (PID) Einstellvorrichtung der Wassertemperatur versehen ist.

5. Espresso-Kaffeemaschine nach einem der Ansprüche 1 bis 4, **dadurch gekennzeichnet, dass** zwischen dem Wasserzufuhr-Hydraulikkreislauf (12) und den beiden Pump-Hydraulikkreisläufen (20, 24) ein erstes Drei-Wege-Ventil (34) angeordnet ist, diese Drei-Wege-Ventil (34) so ausgebildet ist, dass es das von Wasserzufuhr-Hydraulikkreislauf (12) kommende Wasser je nach Bedarf dem ersten Pump-Hydraulikkreislauf (20), dem zweiten Pump-Hydraulikkreislauf (24) oder beiden Pump-Hydraulikkreisläufen (20, 24) zuführt.

6. Espresso-Kaffeemaschine nach Anspruch 5, **dadurch gekennzeichnet, dass** ein zweites Drei-Wege-Ventil (36) zwischen den beiden Pump-Hydraulikkreisen (20, 24) und dem Kessel (14) angeordnet ist, wobei das zweite Drei-Wege-Ventil (36) so konfiguriert ist, dass es das von dem ersten Pump-Hydraulikkreis (20), von dem zweiten Pump-Hydraulikkreis (24) oder von beiden Pump-Hydraulikkreisen (20, 24) kommende Druckwasser unter Zwischenschaltung eines Ladekreises (38) des Druckwassers zu dem Kessel (14) leitet.

7. Espresso-Kaffeemaschine nach einem der Ansprüche 1 bis 6, **dadurch gekennzeichnet, dass** die Pumpe (22) eine Rotationspumpe ist.

8. Espresso-Kaffeemaschine nach einem der Ansprüche 1 bis 6, **dadurch gekennzeichnet, dass** die Pumpe (22) eine Vibrationspumpe ist.

9. Espresso-Kaffeemaschine nach einem der Ansprüche 1 bis 6, **dadurch gekennzeichnet, dass** die Pumpe (22) eine Zahnradpumpe ist.

## Revendications

1. Machine à café expresso comprenant :
- un circuit hydraulique d'alimentation en eau (12) ;
- au moins une bouilloire (14) pour réchauffer l'eau, située en aval dudit circuit hydraulique d'alimentation en eau (12) ;
- une unité de distribution de café (16), située en aval de ladite bouilloire (14) et pourvue d'au moins une plaque à café (18) configurée pour mélanger de l'eau chaude avec du café ; et
- un premier circuit hydraulique de pompage (20), pourvu avec au moins une pompe (22) pour eau, interposé entre ledit circuit hydraulique d'alimentation en eau (12) et ladite bouilloire (14),
la machine à café expresso étant **caractérisée en ce qu'**un deuxième circuit hydraulique de pompage (24) est interposé entre le circuit hydraulique d'alimentation en eau (12) et la bouilloire (14), ledit deuxième circuit hydraulique de pompage (24) étant relié en parallèle audit premier circuit hydraulique de pompage (20) et étant pourvu d'une unité de pompage à levier (26), dans laquelle ladite unité de pompage à levier (26) opère à température ambiante, étant physiquement séparée à la fois de la bouilloire (14) et de l'unité de distribution de café (16).

2. Machine à café expresso selon la revendication 1, **caractérisée en ce que** l'unité de pompage à levier (26) est pourvue d'au moins un piston de pompage (28) entraîné manuellement par un levier (30), dans laquelle ledit piston de pompage (28) est configuré pour pomper de l'eau provenant du circuit hydraulique d'alimentation en eau (12).

3. Machine à café expresso selon la revendication 2, **caractérisée en ce que** le levier (30) actionne le piston de pompage (28) à travers l'interposition d'un ou plusieurs ressorts (32) avec une charge ajustable, de sorte à obtenir différentes courbes et profils de pression d'eau selon les besoins.

4. Machine à café expresso selon l'une quelconque des revendications 1 à 3, **caractérisée en ce que** la bouilloire (14) est pourvue d'un dispositif de réglage proportionnel-intégral-dérivé (PID) de la température de l'eau.

5. Machine à café expresso selon l'une quelconque des revendications 1 à 4, **caractérisée en ce qu'**une première vanne trois voies (34) est interposée entre le circuit hydraulique d'alimentation en eau (12) et les deux circuits hydrauliques de pompage (20, 24), ladite première vanne trois voies (34) étant configurée pour distribuer l'eau provenant du circuit hydraulique d'alimentation en eau (12) au premier circuit hydraulique de pompage (20), au deuxième circuit hydraulique de pompage (24) ou aux deux circuits hydrauliques de pompage (20, 24) selon les besoins.

6. Machine à café expresso selon la revendication 5, **caractérisée en ce qu'**une deuxième vanne trois voies (36) est interposée entre les deux circuits hydrauliques de pompage (20, 24) et la bouilloire (14), ladite deuxième vanne trois voies (36) étant configurée pour distribuer l'eau pressurisée provenant du premier circuit hydraulique de pompage (20), du deuxième circuit hydraulique de pompage (24) ou des deux circuits hydrauliques de pompage (20, 24) vers ladite bouilloire (14), à travers l'interposition d'un circuit de chargement (38) de l'eau pressurisée.

7. Machine à café expresso selon l'une quelconque des revendications 1 à 6, **caractérisée en ce que** la pompe (22) est une pompe rotative.

8. Machine à café expresso selon l'une quelconque des revendications 1 à 6, **caractérisée en ce que** la pompe (22) est une pompe à vibrations.

9. Machine à café expresso selon l'une quelconque des revendications 1 à 6, **caractérisée en ce que** la pompe (22) est une pompe à engrenages.
